# EUROPEAN PATENT APPLICATION

(11) **EP 3 211 842 A1**
(43) Date of publication of application: **30.08.2017**
(21) Application number: 15853457.8
(22) Date of filing: 28.04.2015
(51) Int. Cl.: H04L 12/751

(54) **METHOD AND DEVICE FOR IMPLEMENTING ROUTING**

(30) Priority: 24.10.2014 CN 201410578299
(71) Applicant: ZTE Corporation, Shenzhen, Guangdong 518057 (CN)
(72) Inventor: SONG, Dameng, Shenzhen Guangdong 518057 (CN); WANG, Shoulin, Shenzhen Guangdong 518057 (CN); ZHANG, Jin, Shenzhen Guangdong 518057 (CN)
(74) Representative: Winter, Brandl, Fürniss, Hübner, Röss, Kaiser, Polte - Partnerschaft mbB
(86) International application number: PCT/CN2015/077697
(87) International publication number: WO 2016/062053

(57) **Abstract**

Disclosed are a routing forwarding method and device. A technical solution of embodiments of the present invention includes: determining, by an agent node after receiving a request message, next-hop servers according to a local realm-based routing policy; forwarding the request message to the determined next-hop servers by the agent node, wherein the request message forwarded by the agent node carries a user number. The technical solution of the present application is a solution for implementing routing forwarding based on a return code of a response message, increases the efficiency of routing to a corresponding destination server under a complicated message routing scenario, reduces static maintenance workload to a certain extent, enhances networking and routing capabilities of the node and further increases a utilization rate of network resources.

## Description

### TECHNICAL FIELD

Embodiments of the present invention relate to the technical field of network communications, and in particular to a method and device for implementing routing.

### BACKGROUND

For a commercial operating communication network, Authentication, Authorization and Accounting (AAA) are the basis of operation. A Diameter protocol family is a new generation of AAA technology, and receives much concern because of powerful expandability and security. More and more telecommunication operators select a Diameter protocol as a basic protocol for AAA.

In a Diameter protocol-based system, main codes include a Diameter client, Diameter servers, a Diameter agent and the like which are collectively called a Diameter node. A message is transmitted and received among the nodes, and a message routing process exists inevitably.

A Diameter basic protocol proposes a Diameter realm-based routing concept, and routing analysis is performed based on a realm-based routing table for message transmission. The realm-based routing table includes the following fields: a domain name, an application identifier, a local action, a server identifier, static or dynamic, and a routing lifetime. In an existing art, Diameter realm-based routing is often generated in a static configuration mode.

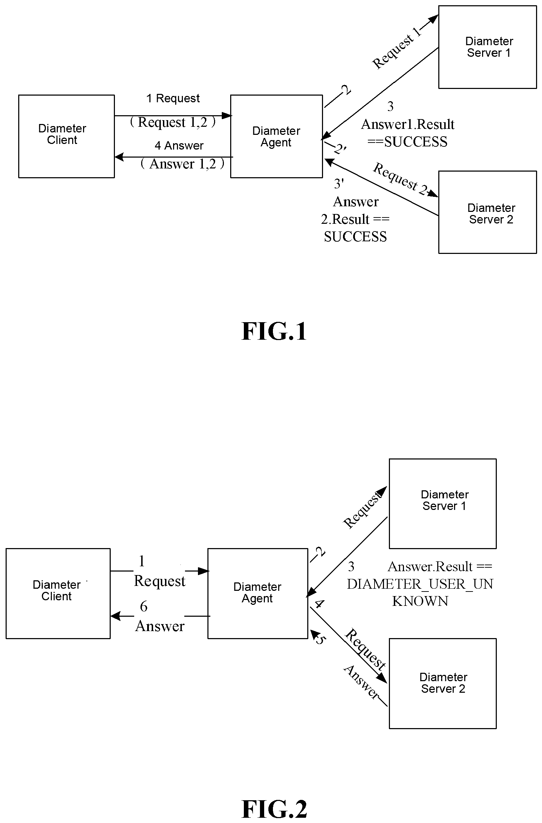

However, in a practical application of the Diameter system, some complicated message routing scenarios cannot be solved only through a statically configured realm-based routing table. For example, when a plurality of Diameter servers conduct load sharing processing according to the distribution of user numbers, the Diameter client or the Diameter agent cannot accurately route the message to a corresponding destination server according to the distribution of the user numbers only based on the statically configured realm-based routing table. To solve such problem, a current practice is: the Diameter client or the Diameter relay agent introduces a method of routing according to the numbers, and messages are uniformly distributed to a plurality of next-hop Diameter servers according to the user numbers or user number segments. Specifically, taking Fig. 1 as an example, a realization process of an existing solution generally includes follow steps.

In a first step: the Diameter node as the client generates two request messages shown as Request 1,2 in Fig. 1; the messages carry the user numbers; the client transmits the request message to the intermediate node such as the Diameter agent; the Diameter agent is connected with a final Diameter server, while two Diameter servers perform distributed processing through the user numbers;
in a second step: after the Diameter agent receives the request message, a realization method of the existing solution is: a user number routing information table is queried through the user numbers to obtain a Diameter server to which the request message corresponding to the user needs to be transmitted for processing; for example, in a schematic diagram for realizing the existing solution, after querying the user number routing information table, the Diameter agent obtains that Request 1 should be transmitted to the Diameter server 1 and Request 2 should be transmitted to the Diameter server 2; and then the Diameter agent respectively transmits the messages; and
in a third step: the Diameter agent receives the successfully processed (Result==SUCCESS shown in Fig. 1) response message, and returns Answer 1 and Answer 2 respectively to the Diameter client.

In this way, a configuration that conducts routing according to the user numbers or the user number segments needs to be introduced. However, under a specific scenario, e.g., when the user numbers are enormous and distribution is random and irregular, excessive configuration and maintenance workloads are greatly introduced by the practice of configuring routing for each user number.

### SUMMARY

To solve the above technical problems, embodiments of the present invention provide a method and device for implementing routing, so as to solve a problem of incapability of effectively routing to a corresponding destination server under a complicated message routing scenario.

To achieve the purpose of embodiments of the present invention, embodiments of the present invention provide a method for implementing routing, including:
determining, by an agent node after receiving a request message, next-hop servers according to a local realm-based routing policy;
forwarding the received request message to the determined next-hop servers by the agent node, wherein the request message forwarded by the agent node carries a user number.

Optionally, when the agent node determines that there are two or more next-hop servers according to the local realm-based routing policy, the forwarding the received request message to the determined next-hop servers by the agent node includes:
forwarding the request message to any of the determined next-hop servers by the agent node;
re-forwarding the request message to another of the determined next-hop servers if the agent node judges that a response message fed back by the server carries an error or unrecognized return code;
repeating the above forwarding and re-forwarding, stopping forwarding the request message by the agent node until the agent node judges that a response message fed back by a server carries a correct return code.

Optionally, the method further includes: feeding back, the agent node, the response message carrying the correct return code to a client or the agent node which transmits the request message.

Embodiments of the present invention further disclose a routing forwarding method, including:
determining peer servers by the client according to local realm-based routing information;
transmitting a request message to the determined peer servers by the client.

Optionally, when the client determines that there are two or more peer servers according to the local realm-based routing information, the transmitting the request message to the peer servers by the client includes:
transmitting the request message to any of the determined next-hop servers by the client;
re-transmitting the request message to another of the determined next-hop servers if the client judges that a response message fed back by the server carries an error or unrecognized return code;
repeating the above transmitting and re-transmitting, stopping transmitting the request message by the client until the client judges that a response message fed back by a server carries a correct return code.

Embodiments of the present invention further disclose a routing forwarding device, including:
a first unit, configured to determine next-hop servers according to a local realm-based routing policy after a request message is received; and
a second unit, configured to forward the request message to the determined next-hop servers, wherein the request message carries a user number.

Optionally, when the first unit determines that there are two or more next-hop servers according to the local realm-based routing policy, the second unit is specifically configured to:
forward the request message to any of the determined next-hop servers;
re-forward the request message to another of the determined next-hop servers if the second unit judges that a response message fed back by the server carries an error or unrecognized return code; and
repeat the above forwarding and re-forwarding, stop forwarding the request message until the second unit judges that a response message fed back by a server carries a correct return code.

Optionally, the device further includes:
a third unit, configured to feed back the response message carrying the correct return code to a client or an agent node which transmits the request message.

Embodiments of the present invention further disclose a client device, including:
a first unit, configured to determine peer servers according to local realm-based routing information;
a second unit, configured to transmit a request message to the determined peer servers, wherein the request message carries a user number.

Optionally, when the first unit determines that there are two or more peer servers according to the local realm-based routing information, the second unit is specifically configured to:
transmit the request message to any of the determined next-hop servers;
re-transmit the request message to another of the determined next-hop servers if the second unit judges that a response message fed back by the server carries an error or unrecognized return code;
repeat the above transmitting and re-transmitting, stop transmitting the request message until the second unit judges that a response message fed back by a server carries a correct return code.

The technical solution of the present application is a solution for implementing routing forwarding based on a return code of a response message, increases the efficiency of routing to a corresponding destination server under a complicated message routing scenario, reduces static maintenance workload to a certain extent, enhances networking and routing capabilities of the node and further increases a utilization rate of network resources.

### BRIEF DESCRIPTION OF DRAWINGS

Drawings described herein are used for providing further understanding of the present invention and forming a part of the present application. Exemplary embodiments of the present invention and the description are used for explaining the present invention, but do not constitute a limitation to the present invention. In the drawings:
Fig. 1 is a schematic diagram showing message forwarding according to a configured user number routing table in an existing art;
Fig. 2 is a schematic diagram showing a routing forwarding scenario in an application example 1 of the present invention;
Fig. 3 is a flow chart showing routing forwarding under a scenario shown in Fig. 2;
Fig. 4 is a schematic diagram showing a routing forwarding scenario in an application example 2 of the present invention; and
Fig. 5 is a flow chart showing routing forwarding under a scenario shown in Fig. 4.

### DETAILED DESCRIPTION

To make the purpose, the technical solution and the advantages of embodiments of the present invention more clear, embodiments of the present invention will be described below in detail in combination with the drawings. It should be explained that if there is no conflict, embodiments in the present application and the features in embodiments can be mutually combined at random.

### Embodiment 1

An inventor of the present application proposes that after the agent node receives the request message, the agent node may not query a user number table, and may directly query the request message through a local simple realm-based routing table and transmit the request message to the servers.

Based on the above idea, the present embodiment provides a routing forwarding method. An implementation body for forwarding a message is an agent node. The method at least includes the following operation:
next-hop servers are determined according to a local realm-based routing policy after an agent node receives a request message; and
the agent node forwards the request message to the determined next-hop servers, wherein the request message forwarded by the agent node carries a user number.

It should be noted that the solution provided in the present embodiment is particularly suitable for a network of an end-to-end protocol, such as a Diameter protocol and the like. However, the local realm-based routing policy in the above agent node refers to a policy not involving routing according to the user number, i.e., the agent node does not maintain the routing policy corresponding to the user number. Routing forwarding is conducted only according to realm-based routing related fields in the request message,
wherein when the agent node determines a plurality of next-hop servers according to the local realm-based routing policy, the agent node can successively forward the request message to the determined next-hop servers until a received response message carries a correct return code. Namely, the agent node first forwards the request message to any of the determined next-hop servers; the agent node re-forwards the request message to another of the determined next-hop servers if the agent node judges that a response message fed back by the server carries an error or unrecognized return code; and the agent node repeats the above forwarding and re-forwarding, stops forwarding the request message until the agent node judges that a response message fed back by a server carries a correct return code, i.e., the agent node does not forward the request message until message routing fails.

It should be noted that, if all the servers feed back a failure error response, the message routing fails and the message is not forwarded continuously, and the process is ended.

In addition, after forwarding the request message, the above agent node can also feed back the response message carrying the correct return code to a client or the agent node which transmits the request message.

Each network element entity involved in realizing the above method is described below on the basis of a Diameter system.

A Diameter client is used for transmitting a Diameter message to a Diameter server, and executing authentication, authorization and accounting operation with the Diameter server.

A Diameter agent includes a relay, a proxy agent and the like. The Diameter agent as an intermediate node in the Diameter system forwards the message or processes and then forwards the message, so as to assist in completing AAA operation between the client and servers.

Diameter servers are used for mutual transmission of the Diameter message with the Diameter client, executing authentication, authorization and accounting operation, and returning a processing result to the client.

Then, in combination with each above network element entity, a complete process for realizing the above method in a preferred solution is described, including the operation below.

In a first step: a Diameter node as the client generates one request message which carries the user number; the client transmits the request message to the intermediate node such as the Diameter agent; the Diameter agent is connected with a final Diameter server, while two Diameter servers perform distributed processing through the user numbers;
in a second step: after the agent receives the request message, a solution of embodiments of the present invention is: the Diameter agent does not query a user number table, and directly queries the request message through a local simple realm-based routing table and transmits the request message to the Diameter server 1;
in a third step: when the Diameter agent receives the response message returned by the Diameter server 1, the return code carried by the response message is judged; if the return code shows SUCCESS, the response message is returned to the Diameter client; if the return code is DIAMETER_USER_UNKNOWN, it indicates that the request message corresponding to the user is not processed by being distributed on the Diameter server 1, and then the Diameter agent re-transmits the original request message to the Diameter server 2;
in a fourth step: the Diameter agent receives the successfully processed response message from the Diameter server 2, and then returns the response message to the Diameter client; and
finally, the Diameter client receives the successfully processed response message, and successfully completes an authentication, authorization or accounting process.

In the above solution, when selecting the Diameter server as a message processing server, the Diameter agent may preferably select the Diameter server 1, or the messages can be averagely transmitted to any one Diameter server in a load sharing mode for processing; then, according to the received corresponding response message, the error code is judged and then whether the messages are re-transmitted to the other server for processing is determined; in this way, the processing pressure of the Diameter server 1 can be appropriately alleviated; and the selection mode can be configured through the local realm-based routing table.

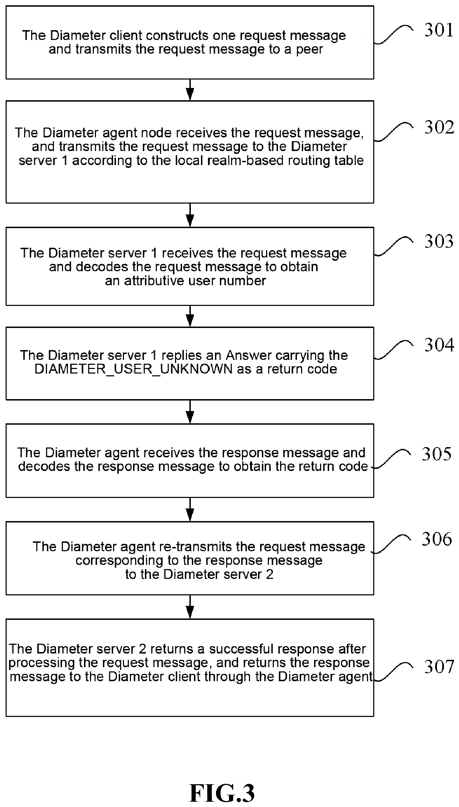

Specific application of the above method is described below in combination with Fig. 2 and Fig. 3.

Fig. 2 shows a schematic diagram of information interaction among Diameter entities in a specific application example 1. Involved Diameter entities include the Diameter client, the Diameter agent and Diameter servers (the Diameter server 1 and the Diameter server 2).

Specifically, an information interaction process among the above Diameter entities is shown in Fig. 3, including the operation below.

In step 301: the Diameter client constructs one request message and transmits the request message to a peer Diameter agent, wherein the request message carries a user number of the client.

Specifically, the above step 301 is operated in two parts, in which:
(1) the Diameter client as the Diameter node constructs one Diameter request message as required by AAA authentication;
(2) the Diameter client transmits the Diameter request message to a next-hop node Diameter agent according to a local routing policy.

In Step 302: the Diameter agent node receives the request message, decodes relevant routing fields of the request message and forwards the request message to the next-hop Diameter server 1 according to the local Diameter realm-based routing policy,
wherein the local realm-based routing policy in the Diameter agent node refers to a policy not involving routing according to the user number, i.e., the Diameter agent node does not maintain the routing policy corresponding to the user number. Routing forwarding is conducted only according to realm-based routing related fields in the request message.

In Step 303: the Diameter server 1 receives the request message, decodes the request message to obtain message contents which include the user number contained in the request message, judges whether the request message can be processed according to the data information of the local user number, and goes to step 304 if finding that the user number is not processed by being distributed on the server.

In Step 304: the Diameter server 1 constructs an error response message and sets a result code of the response message as DIAMETER_USER_UNKOWN. The Diameter server 1 returns the response message to the Diameter agent node by the same route.

In Step 305: the Diameter agent node receives the response message and decodes the response message to obtain the return code therein.

The Diameter agent node receives the response message, decodes the response message to mainly acquire the return code therein, and caches the request message for waiting for the response message after transmitting a request.

In Step 306: the Diameter agent judges the return code of the response message as DIAMETER USER UNKOWN and then re-transmits the request message corresponding to the response message to the Diameter server 2.

In Step 307: the Diameter server 2 receives the request message, returns a successful response after successful processing, transmits back the request message to the Diameter client node through the Diameter agent and completes a routing forwarding of the request message.

The above is only a specific embodiment for the method of the present embodiment, wherein the return code of the response message includes but not limited to DIAMETER_USER_UNKNOWN in the present embodiment, and also includes other foreseeable return codes of services, and moreover, a relevant implementation scope can be extended through a configuration method.

In addition, no agent node may exist in some scenarios, but the client and the servers directly interact. At this moment, the present embodiment further provides a routing forwarding method. An implementation body for forwarding the message is a client. The method at least includes the following operation:
the client determines peer servers according to the local realm-based routing information; and
the client transmits the request message to the determined peer servers, wherein the request message carries the user number.

It should be noted that the above method is also suitable for a system of an end-to-end protocol similar to a Diameter protocol. However, the local realm-based routing information of the above client refers to information not involving routing according to the user number, i.e., the client does not maintain the routing policy corresponding to the user number. Routing transmission is conducted only according to the local realm-based routing information.

Wherein when the client determines a plurality of peer servers according to the realm-based routing information, the client can successively forward the request message to the determined next-hop servers until a received response message carries a correct return code.

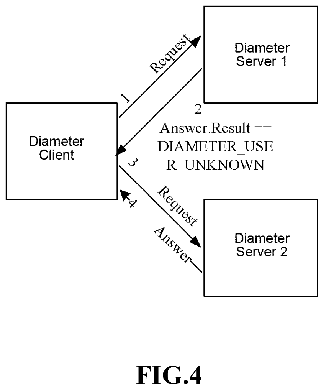

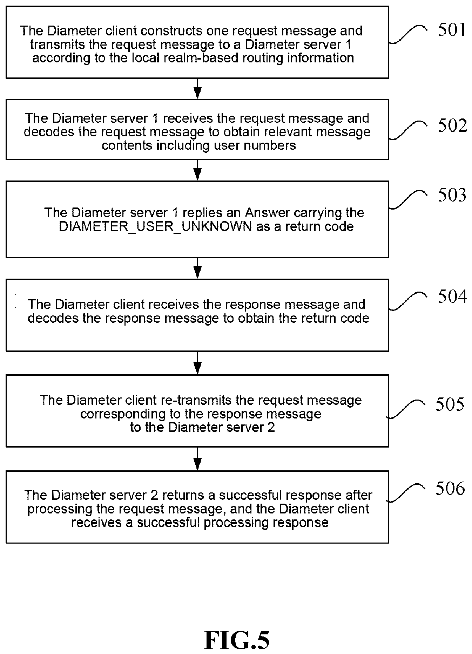

Specific application of the above method is described below in combination with Fig. 4 and Fig. 5.

Fig. 4 shows a schematic diagram of information interaction among Diameter entities in a specific application example 2. Involved Diameter entities include the Diameter client and Diameter servers (the Diameter server 1 and the Diameter server 2).

Fig. 4 shows a specific process of information interaction among the Diameter entities. As shown in Fig. 5, the specific process includes the operation below.

In step 501: the Diameter client constructs one request message and transmits the request message to a peer Diameter server 1 according to the realm-based routing information, wherein the request message carries a user number of the client.

Specifically:
(1) the Diameter client as the Diameter node constructs one Diameter request message as required by AAA authentication;
(2) the Diameter client transmits the Diameter request message to a next-hop node Diameter server 1 according to a local routing policy. Since the Diameter client is directly connected with two Diameter servers in the present embodiment, the local routing policy is only related to a domain name and does not involve a routing policy of the user number. Generally, the Diameter client does not maintain the related Information of the user number.

In Step 502: the Diameter server 1 receives the request message, decodes the request message to obtain message contents which include the user number contained in the request message, judges whether the request message can be processed according to the data information of the local user number, and goes to step 503 if finding that the user number is not processed by being distributed on the server.

In Step 503: the Diameter server 1 constructs an error response message and sets a result code of the response message as DIAMETER_USER_UNKOWN. The Diameter server 1 returns the response message to the Diameter client node by the same route.

In Step 504: the Diameter client node receives the response message and decodes the response message to obtain the return code therein.

The Diameter client node receives the response message, decodes the response message to mainly acquire the return code therein, and caches the request message for waiting for the response message after transmitting a request.

In Step 505: the Diameter client judges the return code of the response message as DIAMETER USER UNKOWN and then re-transmits the request message corresponding to the response message to the Diameter server 2.

In Step 506: the Diameter server 2 receives the request message, and returns a successful response after successful processing; and the Diameter client node successfully receives the response message and completes a routing forwarding of the request message.

The above is only a specific embodiment for the method of the present embodiment, wherein the return code of the response message includes but not limited to DIAMETER_USER_UNKNOWN in the present embodiment, and also includes other foreseeable return codes of services, and moreover, a relevant implementation scope can be extended through a configuration method.

### Embodiment 2

The present embodiment provides a routing forwarding device, and particularly a Diameter proxy node device and the like which at least includes a first unit and a second unit, wherein
the first unit is configured to determine next-hop servers according to a local realm-based routing policy after a request message is received; and
the second unit is configured to forward the request message to the determined next-hop servers, wherein the request message carries a user number,
wherein when the first unit determines a plurality of next-hop servers according to the local realm-based routing policy, the second unit can successively forward the request message to the determined next-hop servers until a received response message carries a correct return code. Namely, the second unit forwards the request message to any of the determined next-hop servers; re-forwards the request message to another of the determined next-hop servers if the second unit judges that a response message fed back by the server carries an error or unrecognized return code; and repeats the above forwarding and re-forwarding, stops forwarding the request message until the second unit judges that a response message fed back by a server carries a correct return code.

Preferably, the above device can also include a third unit, which is mainly configured to receive the response message returned by the next-hop server and feed back the response message carrying the correct return code to a client or the agent node which transmits the request message.

It should be noted that the above device is suitable for a system of an end-to-end protocol similar to a Diameter protocol. However, the local realm-based routing policy involved in the above first unit refers to a policy not involving routing according to the user number, i.e., the above device does not maintain the routing policy corresponding to the user number. Routing forwarding is conducted only according to realm-based routing related fields in the request message,

### Embodiment 3

The present embodiment provides a client device, at least including the following units:
a first unit, configured to determine peer servers according to realm-based routing information; and
a second unit, configured to transmit the request message to the determined peer servers, wherein the transmitted request message carries the user number,
wherein when the first unit determines a plurality of peer servers according to the realm-based routing information, the second unit can successively forward the request message to the determined next-hop servers until a received response message carries a correct return code. Namely, the second unit transmits the request message to any of the determined next-hop servers; re-transmits the request message to another of the determined next-hop servers if the second unit judges that a response message fed back by the server carries an error or unrecognized return code; and repeats the above transmitting and re-transmitting, stops transmitting the request message until the second unit judges that a response message fed back by a server carries a correct return code.

It should be noted that the above device is suitable for a system of an end-to-end protocol similar to a Diameter protocol. In addition, the local realm-based routing information of the above client refers to information not involving routing according to the user number, i.e., the client does not maintain the routing policy corresponding to the user number. Routing transmission is conducted only according to the local realm-based routing information.

Therefore, see corresponding contents of the above embodiment 1 for detailed working processes of the devices of the embodiment 2 and the embodiment 3, which will not be repeated again.

It is observed from the above embodiments that the present application provides a solution for conducting routing forwarding according to the return code in the received response message. Dynamic routing forwarding of the request message according to the return code of the received error response message in each node of the network of the end-to-end protocol such as Diameter, etc. is realized, thereby providing routing decision support for message transmission. Thus, a problem of incapability of effectively routing to a corresponding destination server under a complicated message routing scenario is solved. Moreover, an agent only needs to forward the message through basic realm-based routing without needing to acquire a distribution rule of detailed user numbers on the servers or without needing to maintain the routing information corresponding to the enormous user numbers, thereby greatly reducing configuration and maintenance workloads of the agent node and further increasing the operation and maintenance efficiency of the network.

Those skilled in the art can understand that all or some steps in the above method can be completed through programs to instruct relevant hardware. The programs can be stored in a computer readable storage medium, such as a read-only memory, a disk or CD and the like. Optionally, all or some steps of the above embodiment can be realized using one or more integrated circuits. Accordingly, each module/unit in the above embodiment can be realized in a form of hardware or can be realized in a form of a software function module. The present application is not limited to any specific hardware and software combination.

The above only describes preferred embodiments of the present invention and is not intended to limit a protection scope of the present invention. Any modification, equivalent replacement, improvement, etc. made within a spirit and a principle of the present invention shall be contained within the protection scope of the present invention.

### INDUSTRIAL APPLICABILITY

Embodiments of the present invention propose the routing forwarding method and device. A technical solution of embodiments of the present invention includes: determining, by an agent node after receiving a request message, next-hop servers according to a local realm-based routing policy; forwarding the request message to the determined next-hop servers by the agent node, wherein the request message forwarded by the agent node carries a user number. The technical solution of the present application is a solution for implementing routing forwarding based on a return code of a response message, increases the efficiency of routing to a corresponding destination server under a complicated message routing scenario, reduces static maintenance workload to a certain extent, enhances networking and routing capabilities of the node and further increases a utilization rate of network resources.

## Claims

1. A routing forwarding method, comprising:
Determining, by an agent node after receiving a request message, next-hop servers according to a local realm-based routing policy;
forwarding the received request message to the determined next-hop servers by the agent node,
wherein the request message forwarded by the agent node carries a user number.

2. The method according to claim 1, wherein when the agent node determines that there are two or more next-hop servers according to the local realm-based routing policy, the forwarding the received request message to the determined next-hop servers by the agent node comprises:
forwarding the request message to any of the determined next-hop servers by the agent node;
re-forwarding the request message to another of the determined next-hop servers if the agent node judges that a response message fed back by the server carries an error or unrecognized return code;
repeating the above forwarding and re-forwarding, stopping forwarding the request message by the agent node until the agent node judges that a response message fed back by a server carries a correct return code.

3. The method according to claim 2, further comprising:
feeding back, by the agent node, the response message carrying the correct return code to a client or the agent node which transmits the request message.

4. A routing forwarding method, comprising:
determining peer servers by the client according to local realm-based routing information;
transmitting a request message to the determined peer servers by the client.

5. The method according to claim 4, wherein when the client determines that there are two or more peer servers according to the local realm-based routing information, the transmitting the request message to the peer servers by the client comprises:
transmitting the request message to any of the determined next-hop servers by the client;
re-transmitting the request message to another of the determined next-hop servers if the client judges that a response message fed back by the server carries an error or unrecognized return code;
repeating the above transmitting and re-transmitting, stopping transmitting the request message by the client until the client judges that a response message fed back by a server carries a correct return code.

6. A routing forwarding device, comprising:
a first unit, configured to determine next-hop servers according to a local realm-based routing policy after a request message is received;
a second unit, configured to forward the request message to the determined next-hop servers, wherein the request message carries a user number.

7. The device according to claim 6, wherein when the first unit determines that there are two or more next-hop servers according to the local realm-based routing policy, the second unit is specifically configured to:
forward the request message to any of the determined next-hop servers;
re-forward the request message to another of the determined next-hop servers if the second unit judges that a response message fed back by the server carries an error or unrecognized return code; and
repeat the above forwarding and re-forwarding, stop forwarding the request message until the second unit judges that a response message fed back by a server carries a correct return code.

8. The device according to claim 7, further comprising:
a third unit, configured to feed back the response message carrying the correct return code to a client or an agent node which transmits the request message.

9. A client device, comprising:
a first unit, configured to determine peer servers according to local realm-based routing information;
a second unit, configured to transmit a request message to the determined peer servers, wherein the request message carries a user number.

10. The device according to claim 9, wherein when the first unit determines that there are two or more peer servers according to the local realm-based routing information, the second unit is specifically configured to:
transmit the request message to any of the determined next-hop servers;
re-transmit the request message to another of the determined next-hop servers if the second unit judges that a response message fed back by the server carries an error or unrecognized return code;
repeat the above transmitting and re-transmitting, stop transmitting the request message until the second unit judges that a response message fed back by a server carries a correct return code.
